# EUROPÄISCHE PATENTSCHRIFT

(11) **EP 2 630 396 B1**
(45) Veröffentlichungstag und Bekanntmachung des Hinweises auf die Patenterteilung: **18.03.2015**
(21) Anmeldenummer: 11771142.4
(22) Anmeldetag: 19.10.2011
(51) Int. Cl.: F16K 37/00

(54) **ELEKTRISCHE STELLUNGSERMITTLUNGSVORRICHTUNG ZUM ANBAU AN EIN VENTIL UND VERFAHREN ZUR ERMITTLUNG DER POSITION EINES STELLMITTELS**
ELECTRICAL POSITION-DETERMINING DEVICE FOR MOUNTING ON A VALVE AND METHOD FOR DETERMINING THE POSITION OF AN ACTUATOR
DISPOSITIF DE DÉTERMINATION DE LA POSITION POUR MONTAGE À UNE VANNE ET MÉTHODE DE DÉTERMINATION DE LA POSITION D'UN ACTUATEUR

(30) Priorität: 21.10.2010 DE 102010060113
(43) Veröffentlichungstag der Anmeldung: 28.08.2013
(73) Patentinhaber: SED Flow Control GmbH, 74906 Bad Rappenau (DE)
(72) Erfinder: MALL, Valentin, 74831 Gundelsheim (DE); RUTSCH, Uwe, 75670 Forchtenberg-Sindringen (DE); EHMIG, Uwe, 74177 Bad Friedrichshall (DE); FISCHER, Heiko, 74906 Bad Rappenau (DE)
(74) Vertreter: von Hirschhausen, Helge
(86) Internationale Anmeldenummer: PCT/EP2011/068235
(87) Internationale Veröffentlichungsnummer: WO 2012/052466

(56) Entgegenhaltungen:
- EP-A1- 0 587 532
- DE-A1-102009 015 876
- DE-A1-102009 039 497

## Beschreibung

Die vorliegende Erfindung betrifft eine elektrische Stellungsermittlungsvorrichtung zum Anbau an ein Ventil, insbesondere einem Prozessventil, wie es bspw. in der chemischen Industrie oder in der Nahrungsmittelindustrie Verwendung findet. Ferner bezieht sich die Erfindung auf ein Verfahren zur Ermittlung der Position eines Stellmittels unter Verwendung einer elektrischen Stellungsermittlungsvorrichtung.

Derartige Vorrichtungen bzw. Verfahren sind an sich bekannt. Sie werden in der Regel dazu verwendet, die Stellung eines Antriebsmittels des betreffenden Ventils zu ermitteln, um diese mit entsprechenden Auswertungs- und/oder Anzeigemitteln auszuwerten und/oder anzuzeigen. Zum Teil sind die Auswertungs- und/oder Anzeigemitteln mit der Stellungsermittlungsvorrichtung zu einer Vorrichtung zusammengefasst. Man spricht dann von sogenannten Stellungsanzeigen. Der vorliegende Anmeldungsgegenstand erstreckt sich daher nicht nur auf eine Stellungsermittlungsvorrichtung sondern auch auf Stellungsanzeigen.

Elektrische Stellungsermittlungsvorrichtungen für Prozessventile weisen üblicherweise ein Gehäuse mit einem darin beweglich angeordneten Stellmittel auf, das mittels einer außen am Gehäuse angeordneten Feder so mit einer Federkraft beaufschlagt wird, dass es, wenn es an einem Prozessventil angebaut ist, an das Antriebsmittel des betreffenden Ventils angedrückt wird. Das Stellmittel wird also kraftschlüssig mit dem Antriebsmittel verbunden und kann so dessen Bewegungen folgen. Diese Bewegungen bzw. unterschiedlichen Positionen des Stellmittels werden dann mit Hilfe einer meist ebenfalls im Gehäuse angeordneten Positionserfassungseinrichtung erfasst, die diese, wie gesagt, gegebenenfalls an eine Auswertevorrichtung bzw. Anzeigevorrichtung weiterleitet.

Eine bekannte elektrische Stellungsermittlungsvorrichtung ist bspw. in der EP 0 961 066 B1 offenbart. Bei dieser wird die Position des Stellmittels mit Hilfe eines Linearpotentiometers ermittelt, wobei das Stellmittel mit Hilfe einer, in der Anmeldung selbst nicht näher beschriebenen Feder so mit einer Federkraft beaufschlagt wird dass, wenn es an einem Ventil angebaut ist, an ein Antriebsmittel des Ventils angedrückt wird (also kraftschlüssig mit diesem verbunden wird) und dessen Bewegungen im Ventil folgen kann. Nachteilhaft an dieser Lösung ist jedoch, dass die Vorrichtung relativ groß ausfällt und trotzdem nur für eine begrenzte Anzahl von Ventiltypen verwendet werden kann. Insbesondere kann die Vorrichtung nicht für Ventile unterschiedlichster Ventilhübe verwendet werden ohne dass hierfür unterschiedlichste Stellmittel-Adapter am Stellmittel montiert werden müssen. Insofern ist die Herstellung kostenintensiv und die Montage dieser Stellungsermittlungsvorrichtung relativ aufwendig. Hinzu kommt, dass sich die Stellungsermittlungsvorrichtung insgesamt nur schlecht abreinigen lässt.

Ferner ist aus der DE 10 2009 039497 A1 eine elektrische Stellungsermittlungsvorrichtung zum Anbau an ein Ventil bekannt, welche ein Gehäuse und ein darin beweglich angeordnetes Stellmittel aufweist. Das Stellmittel kann mittels einer am Gehäuse angeordneten Feder so mit einer Federkraft beaufschlagt werden, dass es, wenn es an einem Ventil angebaut ist, an ein Antriebsmittel des Ventils angedrückt wird und dessen Bewegungen im Ventil folgen kann, wobei eine Positionserfassungseinrichtung vorgesehen ist, die die Position des Stellmittels erfasst. Die Positionserfassungseinrichtung ist so ausgeführt, dass mit ihr die Position des Stellmittels berührungslos erfasst wird und die Feder im Gehäuse geführt wird. Diese Anordnung hat den Nachteil, dass das Gehäuse eine Führungsfunktion für die Feder übernimmt und es somit zu keiner Trennung von Gehäuse und den restlichen Bauteilen kommt.

Aus DE 10 2009 015 876 A1 ist eine Überwachungsvorrichtung und ein mit einer derartigen Überwachungsvorrichtung ausgeführtes Hydroventil bekannt, bei dem ein Überdeckungsbereich einer definierten Schaltstellung überwachbar ist. Im Weiteren ist aus EP 0 587 532 A1 ein Sicherheitsventil für einen Dampfkochtopf bekannt.

Der Erfindung liegt daher die Aufgabe zugrunde, eine elektrische Stellungsermittlungsvorrichtung anzugeben, die bei der die Elektronik von den beweglichen Teilen getrennt ist, sodass eine bessere Abdichtung bzw. Abschirmung zu erreichen ist.

Die Lösung der Aufgabe geling mit der elektrischen Stellungsermittlungsvorrichtung gemäß Anspruch 1. Vorteilhafte Weiterbildungen sind in den Unteransprüchen angegeben.

Die erfindungsgemäße elektrische Stellungsermittlungsvorrichtung zum Anbau an ein Ventil hat also ebenfalls ein Gehäuse und ein darin beweglich angeordnetes Stellmittel, das mittels einer am Gehäuse angeordneten Feder, so mit einer Federkraft beaufschlagt wird, dass es, wenn es an einem Ventil angebaut ist, an ein Antriebsmittel des Ventils angedrückt wird und dessen Bewegungen im Ventil folgen kann. Hierbei ist eine Positionserfassungseinrichtung vorgesehen, die die Position des Stellmittels erfasst, wobei diese so ausgeführt ist, dass mit ihr die Position des Stellmittels Berührungslos erfasst wird und die Feder im Gehäuse angeordnet ist.

Das Gehäuse weist ein Gehäuseunterteil auf, das auf einem Ventil befestigt werden kann und auf dem ein Gehäuseoberteil, vorzugsweise drehbar, angeordnet ist, wobei im Gehäuseoberteil die Positionserfassungseinrichtung angeordnet ist. So kann das Gehäuseunterteil bspw. einen Gewindeadapter zur Befestigung des Gehäuses auf dem Gehäuseunterteil bspw. einen Gewindeadapter zur Befestigung des Gehäuses auf dem Ventil, dessen Stellweg des Antriebsmittels mit Hilfe der erfindungsgemäßen Stellungsermittlungsvorrichtung überwacht werden soll, befestigt werden.

Das Gehäuseoberteil ist drehbar auf dem Unterteil angeordnet und zwar so, dass sich möglichst die gesamte Elektronik also die Positionserfassungseinrichtung und gegebenenfalls ein Auswertungsmittel bzw. ein Anschlussmittel wie etwa eine Steckdose, im Gehäuseoberteil befindet. Diese Anordnung hat nämlich den Vorteil, dass die empfindliche Elektronik der Stellungsermittlungsvorrichtung insgesamt mit dem Gehäuseteil verschwenkt wird und daher gut gegen mechanische Beschädigungen aufgrund des Verschwenkens geschützt ist.

Das Gehäuseoberteil weist eine Trägerplatte mit einer Stellmitteleinhausung und einem Außengehäuse auf. So kann auf der Trägerplatte die Positionserfassungseinrichtung montiert werden und in einem nachgeordneten Herstellungsschritt das Außengehäuse aufgebracht werden.

Die Feder ist unter dem Stellmittel innerhalb der Stellmitteleinhausung angeordnet. So wirkt die Feder in axialer Richtung auf das Stellmittel, insbesondere bei einer Ausführung der Feder als Schraubenfeder. Hierbei wird sowohl das Stellmittel, wie auch die Feder innerhalb der Stellmitteleinhausung geführt und gegen seitliches Auswandern gesichert.

Im Gegensatz zur eingangs beschriebenen bekannten elektrischen Stellungsermittlungsvorrichtung wird also nun die Position des Stellmittels nicht mehr mittels eines Linearpotentiometers erfasst, sondern berührungslos. Hierunter ist eine Messmethode zu verstehen, bei der die Positionserfassungseinrichtung bzw. Teile davon nicht mit dem Stellmittel verbunden wird. Hinzu kommt, dass die Feder im Gehäuse angeordnet ist. So kann zum einen die Reinigung vereinfacht werden und zum anderen wird der für die Unterbringung der Positionserfassungsvorrichtung ohnehin notwendige Bauraum des Gehäuses dazu verwendet, eine größere Feder einzubauen, als wenn die Feder zwischen dem Gehäuse der Stellungsermittlungsvorrichtung und dem Ventil eingebaut wird, wie dies beim Stand der Technik der Fall ist. So wird erfindungsgemäß nahezu die gesamte Bauhöhe des Gehäuses für die Abbildung des Ventilhubs mittels des Stellmittels zur Verfügung gestellt. Dies führt dazu, dass die erfindungsgemäße elektrische Stellungsermittlungsvorrichtung ohne weiteres für unterschiedlichste Ventiltypen verwendet werden kann, ohne das hierfür Adapter o.ä. an der Stellungsermittlungsvorrichtung bzw. am Ventil oder dessen Ventilantrieb montiert werden müssen. Dies vergrößert den Einsatzbereich der Vorrichtung, macht also die Herstellung kostengünstiger und erleichtert zudem die Montage deutlich. Ferner hat die Stellmitteleinhausung den Vorteil, dass das Stellmittel gegenüber der Positionserfassungseinrichtung bzw. den im Gehäuseoberteil angeordneten Elektronikbauteilen abgeschirmt wird. Dies schützt diese Bauteile zusätzlich. Außerdem kann die Stellmitteleinhausung auch als Führung für das sich im Gehäuse bewegende Stellmittel dienen.

Weiterbildend ist die Feder als Schraubenfeder ausgebildet und so im Gehäuse angeordnet ist, dass sich ein Teil des Stellmittels im Inneren der Feder befindet. Bei dieser Ausführungsform wird der Bauraum der Feder zumindest teilweise auch als Bauraum für das Stellmittel verwendet. Dies sichert eine optimale Raumausnutzung trotz Aufbringung einer axialen Federkraft auf das Stellmittel.

Weiterbildend ist die Positionserfassungseinrichtung auf der Trägerplatte und zwischen Stellmitteleinhausung und Außengehäuse angeordnet. So ist die Positionserfassungseinrichtung nochmals zusätzlich durch die Stellmitteleinhausung gegenüber Umwelteinflüssen, die über ins Gehäuse eingeführte Stellmittel gelangen könnten, gesichert.

Bevorzugt ist das Gehäuse wasserdicht und/oder staubdicht ausgeführt. Insbesondere erfolgt die Auslegung der Dichtigkeit so, dass die Schutzklasse IP 68 gemäß DIN-EN-60529 erfüllt wird.

Weiterbildend ist am Stellmittel wenigstens ein Magnet angeordnet und die Positionserfassungseinrichtung weist wenigstens einen Hall-Sensor zur Erfassung der Position des Magneten auf. Dann wird die Position des Stellmittels mittels einer Hall-Messung des Magnetfeldes durchgeführt. Somit basiert die Positionserfassung auf einer Auswertung des Bewegungsmusters des Magnets des Stellmittels.

Bevorzugt weist die Positionserfassungseinrichtung zwei Messstellen auf, an denen jeweils ein Paar aus zwei Hall-Sensoren angeordnet ist. Bevorzugt beträgt der Abstand der beiden Messstellen das zweifache der Länge des Magneten. Zweckmäßigerweise ist dabei die untere Messstelle eine Magnetlänge oberhalb der Oberkante des Magneten in seiner untersten Position angeordnet und/oder die obere Messstelle eine Magnetlänge unterhalb der Oberkante des Magneten in seiner obersten Position.

Weiterbildend weist die Positionserfassungseinrichtung eine sich parallel zum Stellmittel erstreckende Platine auf, auf der die Hall-Sensoren paarweise so angeordnet sind, dass jeweils ein Hall-Sensor liegend und einer stehend angeordnet ist. Insbesondere diese Ausführungsform hat sich als besonders geeignet herausgestellt, da hier eine vergleichsweise geringe Anzahl von Hall-Sensoren eine ausreichend genaue Messung ermöglicht. So kann auf die bislang übliche Aneinanderreihung von mehreren Hall-Sensoren entlang der Messstrecke verzichtet werden.

Bevorzugt sind die liegenden Hall-Sensoren parallel zueinander ausgerichtet und die stehenden Hall-Sensoren übereinander auf einer Geraden angeordnet sind, die sich parallel zur Bewegungsrichtung des Stellmittels erstreckt. So können die Messwerte der jeweils gleich ausgerichteten Sensoren also der stehenden Sensoren bzw. der liegenden Sensoren zur Kompensation von gleichgerichteten und/oder homogenen magnetischen Störfeldern, wie etwa dem Erdmagnetfeld oder den Magnetfeldern angrenzender Maschinen, etc. von einander abgezogen werden.

Gerade die Anordnung der Positionserfassungseinrichtung auf einer einzigen sich parallel zum Weg des Stellmittels erstreckenden Platine auf der auch eine Auswertungsvorrichtung angeordnet ist, ergibt im Gegensatz zur EP 0 961 066 B1 auch ein sehr schmales, kompaktes Gehäuse, so dass sogar ein Rastermaß von 32 mm der Stellungsermittlungsvorrichtungen bzw. der Ventile eingehalten werden kann. Es können also selbst auf engstem Raum eingebaute Ventile mir der erfindungsgemäßen Vorrichtung ausgerüstet bzw. nachgerüstet werden.

Weiterbildend ist die Positionserfassungseinrichtung so ausgeführt, dass sie zur Initialisierung der elektrischen Stellungsermittlungsvorrichtung eine Endlagenermittlung des Stellmittels durchführt. So ist die erfindungsgemäße Stellungsermittlungsvorrichtung in der Lage, sowohl die Auf- wie auch die Zu-Stellung des Ventils über das Stellmittel zu ermitteln.

Bevorzugt weist die Positionserfassungseinrichtung einen optischen Sensor auf, mit dem die Initialisierung in Gang gesetzt werden kann. Zwar kann eine Initialisierung grundsätzlich auch über eine mit der Positionserfassungseinrichtung verbundene Steuerung erfolgen. Aber gerade für die Erstinbetriebnahme der erfindungsgemäßen Stellungsermittlungsvorrichtung ist es vorteilhaft, wenn die Positionserfassungseinrichtung noch eine zusätzliche Möglichkeit schafft, um die Initialisierung an der Stellungsermittlungsvorrichtung, sprich direkt vor Ort am Ventil, vorzunehmen. Denn in der Regel ist der die Stellungsermittlungsvorrichtung in Betrieb nehmende Monteur irgendwo in einer Industrieanlage, baut diese auf das Ventil und möchte möglichst umgehend wissen, ob die Endlagen bereits ermittelt worden sind. Gerade für die Verkürzung der Inbetriebnahmezeiten der erfindungsgemäßen Stellungsermittlungsvorrichtung ist es von Vorteil, wenn der Monteur dies, wie hier beschrieben, mit Hilfe eines Sensors direkt am Einbauort einleiten kann. Ein weiterer Vorteil der hier dargestellten Lösung liegt nun darin, dass mit Hilfe eines optischen Sensors auf eine besonders einfache Art und Weise die Initialisierung in Gang gesetzt werden kann. Der Monteur muss nichts anderes als eine kleine Taschenlampe o.ä. bei sich führen, um dem optischen Sensor ein entsprechendes Lichtsignal zu geben, damit die erfindungsgemäße Positionserfassungseinrichtung mit der Initialisierung beginnt.

Bevorzugt ist die elektrische Stellungsermittlungsvorrichtung für die Verwendung auf Ventilen der Nennweiten von DN4 bis DN100 ausgelegt, wobei für die Verwendung auf Ventilen der Nennweiten DN40 NC bis DN100 ein Stellmittel-Adapter am Stellmittel angebracht wird. Es ergibt sich also ein äußerst großer Einsatzbereich der erfindungsgemäßen Stellungsermittlungsvorrichtung, bei der diese ohne Anordnung von Adaptern verwendet werden kann. Darüber hinaus kann sie sogar für noch größere Ventile verwendet werden, dann allerdings mit einem Stellmittel-Adapter der jedoch sehr einfach gehaltenen werden kann.

Denn bevorzugt ist der Stellmittel-Adapter so ausgeführt, dass er eine stufenlose Anpassung an unterschiedliche Ventile ermöglicht. Dies gelingt insbesondere mit einer teleskopartig aufgebauten Adapter-Lösung, oder aber mit einem Adapter, der bspw. in das Stellmittel hinein- bzw. hinausgeschraubt werden kann.

Bevorzugt besteht das Gehäuse zumindest teilweise aus einem Kunststoff. Auch ist es zweckmäßig, wenn es zumindest teilweise reibverschweißt ist und/oder zumindest teilweise aus einem lichtdurchlässigen Material besteht.

Insbesondere bei Verwendung einer Positionserfassungseinrichtung mit einem optischen Sensor und/oder LED-Anzeigen zum Betriebsstatus ist es von Vorteil lichtdurchlässiges Material zu verwenden. Auch kann es wünschenswert sein, wenn wenigstens ein Lichtstrahlen umlenkendes Optikbauteil im bzw. am Gehäuse angeordnet ist. Dies ist nämlich meist dann von Vorteil, wenn der lichtdurchlässige Teil des Gehäuses nicht unmittelbar vor dem Sensor angeordnet werden kann bzw. der optische Sensor, etwa zur Optimierung der Gehäuseabmessungen, an einem Einbauort angeordnet ist, der nicht ohne weiteres von Außenlicht erreicht werden kann. So können bspw. Prismen oder Umlenkspiegel als entsprechende Optikbauteile angeordnet werden, um Licht von außen zu einem optischen Sensor zu bringen, der an einem entlegenen Einbauort angeordnet ist. Ist das Gehäuse aus einem Kunststoff ausgeführt, können diese bei dessen Herstellung zum Beispiel direkt in das Gehäuse einspritzt oder eingearbeitet werden.

Für die Verwendung an einem Ventil mit Drehantrieb kann die erfindungsgemäße Stellungsermittlungsvorrichtung ebenfalls verwendet werden, ohne dass hierfür aufwendige Umbaumaßnahmen notwendig sind. Erfindungsgemäß weist die Stellungsermittlungsvorrichtung für die Verwendung an einem Ventil mit Drehantrieb ein Stellmittel auf, an dem wenigstens ein Magnet so angeordnet ist, dass sich dessen Pole quer zu einer Drehachse des Stellmittels erstrecken und die Positionserfassungseinrichtung mit Hilfe des Magneten die Winkellage des Stellmittels ermittelt. So kann es unter Umständen nur notwendig sein, den Magnet am Stellmittel auszutauschen bzw. anders anzuordnen und die Auswertungsalgorithmen der Positionserfassungseinrichtung entsprechend anzupassen.

Weiterbildend können am Stellmittel zwei Magnete so angeordnet sein, dass deren Pole zueinander versetzt sind. Dies verbessert nochmals die Messgenauigkeit.

Ferner gelingt die Lösung der Aufgabe mit einem Verfahren zur Ermittlung der Position eines Stellmittels unter Verwendung einer elektrischen Stellungsermittlungsvorrichtung der vorhergehend beschriebenen Art bei dem die Messwerte der sich jeweils parallel zu einer gleichen Raumachse erstreckenden Hall-Sensoren von einander subtrahiert werden und der so ermittelte Differenzwert von der Positionserfassungseinrichtung zur Bestimmung der Position des Stellmittels ausgewertet wird. Denn damit gelingt es, den Einfluss von gleich gerichteten und/oder homogenen magnetischen Störfeldern, wie etwa dem des Erdmagnetfeldes, der Magnetfelder angrenzender Maschinen zu eliminieren. Im Gegensatz zu bisher nur auf die Messung des Winkels des Magnetfeldes ausgerichteten Lösungen im Stand der Technik verbessert dies die Messgenauigkeit und ermöglicht letztlich sogar die Verwendung einer geringen Anzahl von Hall-Sensoren.

Denn weiterbildend können die Differenzwerte der Messwerte der Hall-Sensoren addiert werden. Diese Summen werden dann quadriert und die so erhaltenen Rechenwerte mit einer in der Positionserfassungseinrichtung und/oder einem Auswertungsmittel hinterlegten Sollwertkurve verglichen. Als Position des Magneten des Stellmittels wird dann der Punkt ausgewählt, für den die geringste Abweichung des Rechenwertes von der Sollwertkurve ermittelt wird. Zur Suche des Punktes mit der geringsten Abweichung vom Sollwert kann ein üblicher Suchalgorithmus verwendet werden.

Das Ergebnis des erfindungsgemäßen Einsatzes einer hinterlegten Sollwertkurve und der Methode der kleinsten Fehlerquadrate in Kombination mit einem geeigneten Suchalgorithmus ist eine Vergrößerung des Messweges und eine Kompensation von Fehlern die durch Alterung, Fertigungstoleranzen etc. entstehen. Im Gegensatz zum Stand der Technik gelingt es mit diesen Verfahren die Hall-Sensoren weiter beabstandet anzuordnen. Mussten bislang die Messstellen mit den Hall-Sensoren etwa im Abstand der Länge des Magneten angeordnet werden, kann nun der Messstellenabstand verringert werden oder aber die Bauhöhe verringert werden. Denn statt mehr Hall-Sensoren entlang der Bewegungsstrecke des Stellmittels konnte man bislang auch längere Magneten einbauen, was aber zu deutlich größeren Bauhöhen geführt hat. Das erfindungsgemäße Verfahren führt also zu einer Bauhöhenreduktion und/oder Kostenersparnis bei der Herstellung der Vorrichtung bei insgesamt genaueren Messergebnissen.

Nachfolgend wird die Erfindung anhand von drei in der Zeichnung gezeigten Ausführungsbeispielen näher beschrieben. Darin zeigen schematisch:
- Fig. 1: ein erstes Ausführungsbeispiel der erfindungsgemäßen elektrischen Stellungsermittlungsvorrichtung für die Anwendung an einem translatorisch bewegten Ventilantrieb in räumlicher Darstellung;
- Fig. 2: einen Schnitt durch die in Fig. 1 gezeigte Vorrichtung;
- Fig. 3: die in allen drei Ausführungsbeispielen verwendete Positionserfassungseinrichtung;
- Fig. 4: eine Seitenansicht des in Fig. 1 gezeigten ersten Ausführungsbeispiels mit teilweisem Schnitt zur Darstellung der optischen Bauteile und des Lichtwegs;
- Fig. 5: die vergrößerte Darstellung des aufgeschnittenen Details der Fig. 4;
- Fig. 6: ein zweites Ausführungsbeispiel der erfindungsgemäßen elektrischen Stellungsermittlungsvorrichtung für die Anwendung an einem Drehantrieb; und
- Fig. 7: ein drittes Ausführungsbeispiel der erfindungsgemäßen elektrischen Stellungsermittlungsvorrichtung für die Anwendung an einem Drehantrieb.

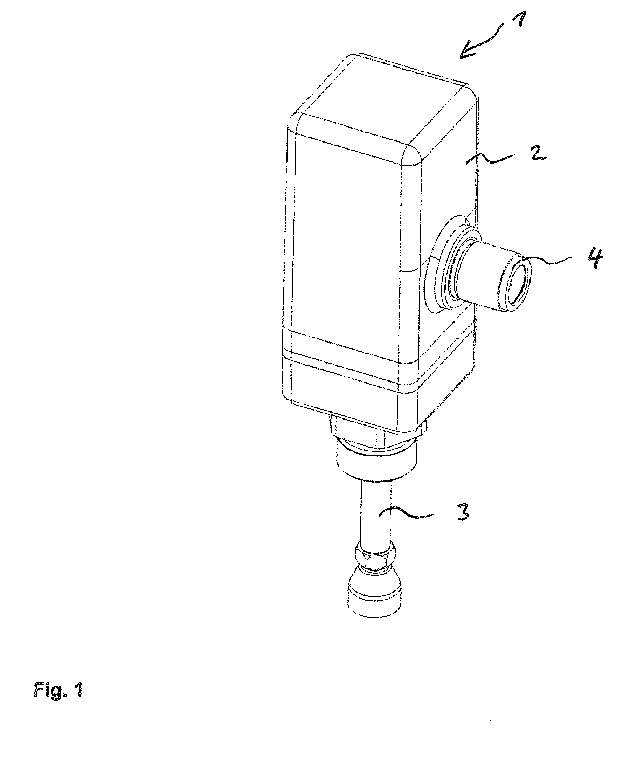

Fig. 1 zeigt eine erfindungsgemäße elektrische Stellungsermittlungsvorrichtung 1 für ein nicht dargestelltes Ventil mit einem Gehäuse 2 und einem darin beweglich angeordneten Stellmittel 3 im zusammengebauten Zustand, so wie es auf ein Ventil aufgesetzt wird. Ferner ist eine Anschlussbuchse 4 zu erkennen über die die elektrische Stellungsermittlungsvorrichtung an eine Stromversorgung und eine Steuerung bzw. Regelungsanlage angeschlossen werden kann.

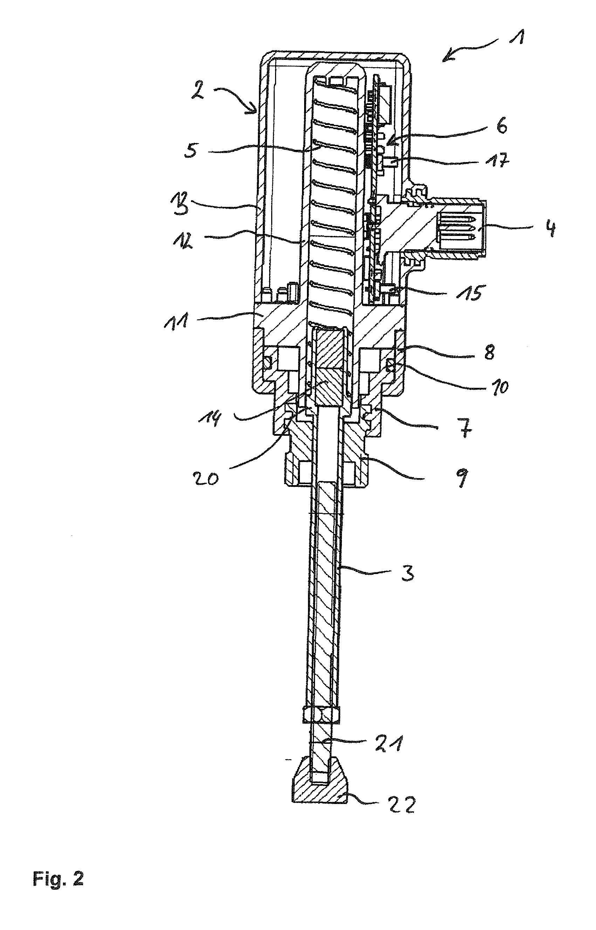

Wie man insbesondere der Fig. 2, also der Schnittdarstellung, entnehmen kann, weist die Stellungsermittlungsvorrichtung 1 eine im Gehäuse 2 angeordnete Feder 5 auf, die im vorliegenden Fall als Schraubenfeder ausgeführt ist. Im Inneren des Gehäuses 2 ist die Positionserfassungseinrichtung 6 gut vor Feuchtigkeit und Staub geschützt, angeordnet.

Das Gehäuse 2 ist nun erfindungsgemäß so geschickt aufgebaut, dass sich ein möglichst großer Federweg einstellt, so dass unterschiedlichste Ventilhübe mit ein und derselbe erfindungsgemäßen elektrischen Stellungsermittlungsvorrichtung erfasst werden können, ohne das hierfür die Stellungsermittlungsvorrichtung 1 in zumindest nennenswerter Art und Weise umgebaut werden muss.

In den hier gezeigten Ausführungsbeispielen weist das Gehäuse 2 ein Gehäuseunterteil 7 und ein Gehäuseoberteil 8 auf. Das Gehäuseunterteil 7 besteht aus einem Kunststoff, bspw. Polysulfon (PSU) und ist im Spritzgussverfahren herstellbar. In das Gehäuseunterteil 7 ist eine Gewindehülse 9 aus Edelstahl eingegossen. Die Gewindehülse 9 ist zweckmäßiger Weise eine M12 x 1 oder M 16 x 1 Mutter. Mit Hilfe der Gewindehülse 9 kann das Gehäuseunterteil 7 an ein übliches Prozessventil angeschraubt werden. Das Gehäuseoberteil 8 besteht ebenfalls aus einem Kunststoff wie etwa PSU. Konkret besteht es aus einer Trägerplatte 11 mit einer Stellmitteleinhausung 12 und einem Außengehäuse 13 und kann gegenüber dem Gehäuseunterteil 7 verdreht werden. Es ist hierzu mittels einer Dichtung 10 abgedichtet.

Die Trägerplatte 11 dient der Aufnahme der Positionserfassungseinrichtung 6, aber auch der Befestigung der Feder 5 sowie der Führung des Stellmittels 3 in der einstückig mit der Trägerplatte 11 verbundenen Stellmitteleinhausung 12. In der Stellmitteleinhausung 12 sind, wie man auch der Fig. 2 gut entnehmen kann, die Feder 5 und das Stellmittel 3 so angeordnet, dass die Federkraft axial auf das Stellmittel 3 in Richtung der Gehäuseunterteils 7 einwirkt.

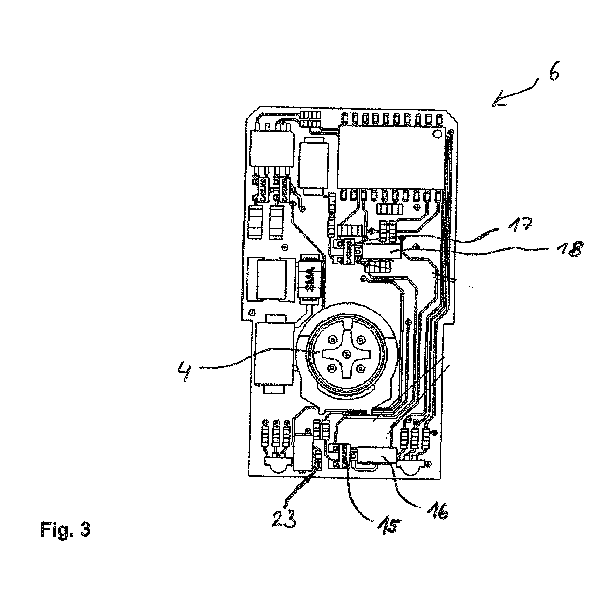

Das Stellmittel 3 weist an seinem oberen Ende einen Magnet 14 auf. Dessen Magnetfeld kann über die Positionserfassungseinrichtung 6 mit Hilfe von vier Hall-Sensoren 15, 16, 17, 18 erfasst werden, die jeweils an zwei Messstellen paarweise angeordnet sind, siehe hierzu auch Fig. 3.

Das Stellmittel 3 ist in der hier gezeigten Ausführungsform als Hohlzylinder ausgebildet, in dem an seiner oberen Seite der Magnet 14 angeordnet ist und an dessen Außenseite im oberen Bereich die Feder 5 angreift. Damit die Feder 5 axiale Federkräfte auf das Stellmittel 3 ausüben kann, weist dieser an seinem oberen Ende einen Anschlagring 20 auf, der zugleich auch eine Führung für das Stellmittel 3 in der Stellmitteleinhausung 12 bildet.

Um die elektrische Stellungsermittlungsvorrichtung 1 auch an den Ventilen mit sehr großem Ventilhub verwenden zu können, kann das Stellmittel 3 mit Hilfe eines Stellmittel-Adapters 21 stufenlos verlängert werden. Hierzu wird der Stellmittel-Adapter 21 in das Stellmittel 3 eingeschraubt und dort gegebenenfalls mit einer Kontermutter gekontert. Damit der Stellmitteladapter 21 bzw. das Stellmittel 3 eine definierte Anlagefläche am Ventilantrieb hat, kann man auf den Stellmittel-Adapter 21 bzw. das Stellmittel 3 einen Aufsatzfuß 22 aufbringen.

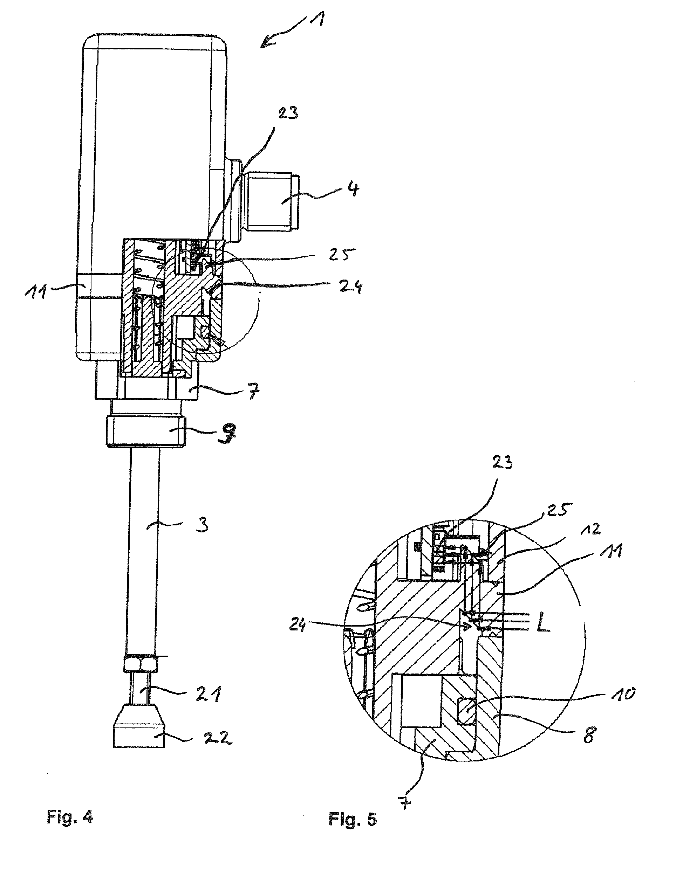

Wie man der teilweise frei geschnittenen Darstellungen in Fig. 4 entnehmen kann, weist das hier dargestellte Ausführungsbeispiel der Vorrichtung zudem einen optischen Sensor 23 auf, mit dem die Initialisierung der elektrischen Stellungsermittlungsvorrichtung 1 in Gang gesetzt werden kann, ohne dass man hierfür in die Steuerung der Anlage in der die Vorrichtung eingebaut ist, eingreifen muss. Vielmehr kann der die elektrische Stellungsermittlungsvorrichtung 1 einbauende Monteur vor Ort die Initialisierung mit Hilfe einer Taschenlampe in Gang setzen, in dem er diese unterhalb der Buchse 4 auf dem aus transparenten Kunststoff bestehenden Teil des Gehäuses 2, nämlich die Trägerplatte 11, richtet.

Die aus transparentem Kunststoff bestehende Trägerplatte 11 weist in diesem Bereich zwei Prismen 24 und 25 auf. Daher kann das einfallende Licht L wie in Fig. 5 dargestellt, auf den optischen Sensor 23 umgelenkt werden, obwohl dieser etwas oberhalb der Trägerplatte 11 auf der Platine 19 der Positionserfassungseinrichtung angeordnet ist.

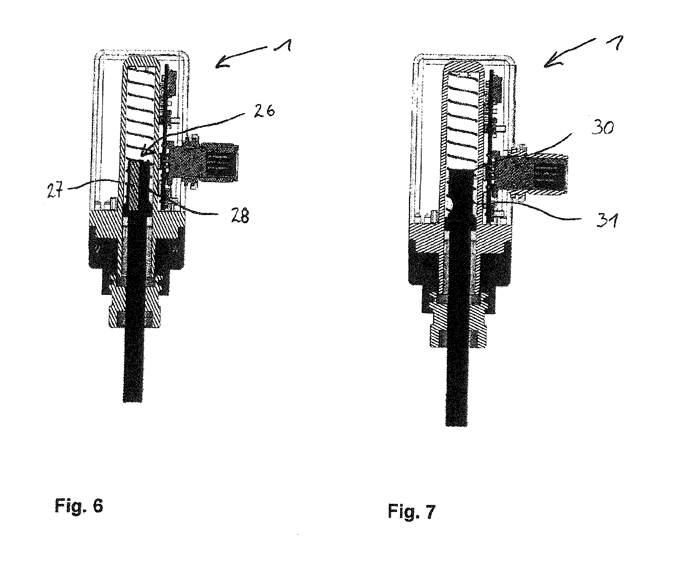

Bei den in den Figuren 1-5 gezeigten Ausführungsbeispielen handelt es sich um eine elektrische Stellungsermittlungsvorrichtung, die zur Ermittlung der Ventilstellung eines translatorisch arbeitenden Ventilantriebes gedacht ist. Alternativ und wie in Fig. 6 bzw. 7 gezeigt, kann die elektrische Stellungsermittlungsvorrichtung aber auch für Drehantriebe eingesetzt werden.

So zeigt das in Fig. 6 dargestellte zweite Ausführungsbeispiel eine Variante einer Stellungsermittlungsvorrichtung 1 für einen Drehantrieb, bei dem ein etwas veränderter Magnet 26 am Stellmittel 3 angeordnet ist. Denn, der Magnet 26 ist mit seinen Nord-SüdPolen quer zur Längsachse des Stellmittels 3 ausgerichtet. D.h., mit anderen Worten, dass sich in Fig. 6 der Südpol 27 links und der Nordpol 28 rechts befinden kann. Bei dem dritten Ausführungsbeispiel gemäß Fig. 7 sind zwei Magneten 30 und 31 am Stellmittel 3 angeordnet, deren Pole zueinander um 90° versetzt sind. Den beiden Ausführungsbeispiele ist gemeinsam, dass die erfindungsgemäße Stellungsermittlungsvorrichtung 1 ansonsten gegenüber der für translatorische Ventilantriebe ausgebildeten Ausführungsvariante gemäß Fig. 2 nicht anderweitig verändert werden muss, um dieses für einen rotatorisch betriebenen Ventilantrieb verwenden zu können. Die erfindungsgemäße elektrische Stellungsermittlungsvorrichtung 1 ist also ausgesprochen einfach auf unterschiedlichste Ventilantriebsarten, aber auch Ventilabmessungen anpassbar, ohne das hierfür größere Montagearbeiten oder Umrüstungsarbeiten notwendig sind.

### Bezugszeichenliste

- 1): elektrische Stellungsermittlungsvorrichtung
- 2): Gehäuse
- 3): Stellmittel
- 4): Anschlussbuchse
- 5): Feder
- 6): Positionserfassungseinrichtung
- 7): Gehäuseunterteil
- 8): Gehäuseoberteil
- 9): Gewindehülse
- 10): Dichtung
- 11): Trägerplatte
- 12): Stellmitteleinfassung
- 13): Außengehäuse
- 14): Magnet
- 15): Hall-Sensoren unten
- 16): Hall-Sensoren unten
- 17): Hall-Sensoren oben
- 18): Hall-Sensoren oben
- 19): Platine
- 21): Stellmittel-Adapter
- 22): Aufsatzfuß
- 23): optischer Sensor
- 24): Prisma
- 25): Prisma
- 26): Magnet für Drehantrieb
- 27): Südpol
- 28): Nordpol
- 29):
- 30): oberer Magnet für Drehantrieb
- 31): unterer Magnet für Drehantrieb

## Patentansprüche

1. Elektrische Stellungsermittlungsvorrichtung (1) zum Anbau an ein Ventil mit einem Gehäuse (2) und einem darin beweglich angeordneten Stellmittel (3), das mittels einer am Gehäuse (2) angeordneten Feder (5) so mit einer Federkraft beaufschlagt wird, dass es, wenn es an einem Ventil angebaut ist, an ein Antriebsmittel des Ventils angedrückt wird und dessen Bewegungen im Ventil folgen kann, wobei eine Positionserfassungseinrichtung (6) vorgesehen ist, die die Position des Stellmittels (3) erfasst, wobei die Positionserfassungseinrichtung (6) so ausgeführt ist, dass mit ihr die Position des Stellmittels (3) berührungslos erfasst wird und die Feder (5) im Gehäuse (2) angeordnet ist,
**dadurch gekennzeichnet, dass**
das Gehäuse (2) ein Gehäuseunterteil (7) aufweist, das auf einem Ventil befestigt werden kann und auf dem ein Gehäuseoberteil (8), vorzugsweise drehbar, angeordnet ist, wobei im Gehäuseoberteil (8) die Positionserfassungseinrichtung (6) angeordnet ist und das Gehäuseoberteil (8) eine Trägerplatte (11) mit einer Stellmitteleinhausung (12) und ein Außengehäuse (13) aufweist, wobei das Stellmittel (3) und die Feder (5) innerhalb der Stellmitteleinhausung (12) angeordnet sind.

2. Elektrische Stellungsermittlungsvorrichtung nach Anspruch 1,
**dadurch gekennzeichnet, dass**
die Feder (5) als Schraubenfeder ausgebildet und so im Gehäuse (2) angeordnet ist, dass sich ein Teil des Stellmittels (3) im Inneren der Feder (5) befindet.

3. Elektrische Stellungsermittlungsvorrichtung nach einem der vorhergehenden Ansprüche,
**dadurch gekennzeichnet, dass**
die Positionserfassungseinrichtung (6) auf der Trägerplatte (11) und zwischen Stellmitteleinhausung (12) und Außengehäuse (13) angeordnet ist.

4. Elektrische Stellungsermittlungsvorrichtung nach einem der vorhergehenden Ansprüche,
**dadurch gekennzeichnet, dass**
das Gehäuse (2) wasserdicht und/oder staubdicht ist

5. Elektrische Stellungsermittlungsvorrichtung nach einem der vorhergehenden Ansprüche,
**dadurch gekennzeichnet, dass**
am Stellmittel (3) wenigstens ein Magnet (14, 26, 30, 31) angeordnet ist und die Positionserfassungseinrichtung (6) wenigstens einen Hall-Sensor (15, 16, 17, 18) zur Erfassung der Position des Magneten (14, 26, 30, 31) aufweist.

6. Elektrische Stellungsermittlungsvorrichtung nach einem der vorhergehenden Ansprüche,
**dadurch gekennzeichnet, dass**
die Positionserfassungseinrichtung (6) zwei Messstellen aufweist an denen jeweils ein Paar aus zwei Hall-Sensoren (15, 16; 17, 18) angeordnet ist.

7. Elektrische Stellungsermittlungsvorrichtung nach einem der vorhergehenden Ansprüche,
**dadurch gekennzeichnet, dass**
der Abstand der beiden Messstellen dem zweifachen der Länge des Magneten (14) entspricht.

8. Elektrische Stellungsermittlungsvorrichtung nach einem der vorhergehenden Ansprüche,
**dadurch gekennzeichnet, dass**
die untere Messstelle eine Magnetlänge oberhalb der Oberkante des Magneten (14) in seiner untersten Position angeordnet ist und/oder die obere Messstelle eine Magnetlänge unterhalb der Oberkante des Magneten (14) in seiner obersten Position angeordnet ist.

9. Elektrische Stellungsermittlungsvorrichtung nach einem der vorhergehenden Ansprüche,
**dadurch gekennzeichnet, dass**
die Positionserfassungseinrichtung (6) eine sich parallel zur Bewegungsrichtung des Stellmittels (3) erstreckende Platine (19) aufweist, auf der die Hall-Sensoren (15, 16, 17, 18) paarweise so angeordnet sind, das jeweils ein Hall-Sensor (16, 18) liegend und einer stehend (15, 17) angeordnet ist.

10. Elektrische Stellungsermittlungsvorrichtung nach Anspruch 9,
**dadurch gekennzeichnet, dass**
die liegenden Hall-Sensoren (16, 18) parallel zueinander ausgerichtet sind und die stehenden Hall-Sensoren (15, 17) übereinander auf einer Geraden angeordnet sind, die sich parallel zur Bewegungsrichtung des Stellmittels (3) erstreckt.

11. Elektrische Stellungsermittlungsvorrichtung nach einem der vorhergehenden Ansprüche,
**dadurch gekennzeichnet, dass**
die Positionserfassungseinrichtung (6) so ausgeführt ist, dass sie zur Initialisierung der elektrischen Stellungsermittlungsvorrichtung (1) eine Endlagenermittlung des Stellmittels (3) durchführt.

12. Elektrische Stellungsermittlungsvorrichtung nach Anspruch 5,
**dadurch gekennzeichnet, dass**
die Positionserfassungseinrichtung (6) einen optischen Sensor (23) aufweist, um die Initialisierung in Gang setzen zu können.

13. Elektrische Stellungsermittlungsvorrichtung nach einem der vorhergehenden Ansprüche,
**dadurch gekennzeichnet, dass**
sie für die Verwendung auf Ventilen der Nennweiten von DN4 bis DN100 ausgelegt ist, wobei für die Verwendung auf Ventilen der Nennweiten DN40 NC bis DN100 ein Stellmittel-Adapter (21) am Stellmittel (3) angebracht wird.

14. Elektrische Stellungsermittlungsvorrichtung nach einem der vorhergehenden Ansprüche
**dadurch gekennzeichnet, dass**
der Stellmittel-Adapter (21) so ausgeführt ist, dass er eine stufenlose Anpassung an unterschiedliche Ventile ermöglicht.

15. Elektrische Stellungsermittlungsvorrichtung nach einem der vorhergehenden Ansprüche,
**dadurch gekennzeichnet, dass**
das Gehäuse (2) zumindest teilweise aus einem Kunststoff besteht.

16. Elektrische Stellungsermittlungsvorrichtung nach einem der vorhergehenden Ansprüche,
**dadurch gekennzeichnet, dass**
das Gehäuse (2) zumindest teilweise reibverschweißt ist.

17. Elektrische Stellungsermittlungsvorrichtung nach einem der vorhergehenden Ansprüche,
**dadurch gekennzeichnet, dass**
das Gehäuse (2) zumindest teilweise aus einem lichtdurchlässigen Material besteht.

18. Elektrische Stellungsermittlungsvorrichtung nach Anspruch 17,
**dadurch gekennzeichnet, dass**
im lichtdurchlässigen Teil (11) des Gehäuses (2) wenigstens ein Lichtstrahlen umlenkendes Optikbauteil (24, 25) angeordnet ist.

19. Elektrische Stellungsermittlungsvorrichtung nach einem der vorhergehenden Ansprüche,
**dadurch gekennzeichnet, dass**
die Stellungsermittlungsvorrichtung (1) für die Verwendung an einem Ventil mit Drehantrieb ein Stellmittel (3) aufweist, an dem wenigstens ein Magnet (26, 30, 31) so angeordnet ist, dass sich dessen Pole (27, 28) quer zu einer Drehachse des Stellmittels (3) erstrecken und die Positionserfassungseinrichtung (1) mit Hilfe des Magneten (26, 30, 31) die Winkellage des Stellmittels (3) ermittelt.

20. Elektrische Stellungsermittlungsvorrichtung nach Anspruch 19,
**dadurch gekennzeichnet, dass**
am Stellmittel (3) zwei Magnete (30, 31) so angeordnet sind, dass deren Pole zueinander versetzt sind.

21. Verfahren zur Ermittlung der Position eines Stellmittels (3) unter Verwendung einer elektrischen Stellungsermittlungsvorrichtung (1) nach einem der vorhergehenden Ansprüche,
**dadurch gekennzeichnet, dass**
die Messwerte der sich jeweils parallel zu einer gleichen Raumachse erstreckenden Hall-Sensoren (15 und 17, 16 und 18) von einander subtrahiert werden und der so ermittelte Differenzwert von der Positionserfassungseinrichtung (6) zur Bestimmung der Position des Stellmittels (3) ausgewertet wird.

22. Verfahren zur Ermittlung der Position eines Stellmittels (3) nach Anspruch 21,
**dadurch gekennzeichnet, dass**
die Differenzwerte der Messwerte der Hall-Sensoren (15 und 17, 16 und 18) addiert und quadriert werden und die so erhaltenen Rechenwerte mit einer in der Positionserfassungseinrichtung (6) hinterlegten Sollwertkurve verglichen werden, wobei als Position des Magneten (14) des Stellmittels (3) der Punkt ausgewählt wird, für den die geringste Abweichung des Rechenwertes von der Sollwertkurve ermittelt wird.

## Claims

1. Electrical position-detecting apparatus (1) for mounting on a valve including a housing (2) and an actuating means (3) movably arranged therein, which is acted upon with a spring force by means of a spring (5) arranged on the housing (2) so that, when it is mounted on a valve, it is pressed against an actuator of the valve and can follow its movements within the valve, wherein a position detection device (6) is provided, which detects the position of the actuating means (3), wherein the position detection device (6) is so constructed that the position of the actuating means (3) is contactlessly determined with it and the spring (5) is arranged in the housing (2), **characterised in that** the housing (2) includes a housing lower portion (7), which can be secured to a valve and on which a housing upper portion (8) is arranged, preferably rotatably, wherein the position detection device (6) is arranged in the housing upper portion (8) and the housing upper portion (8) includes a support plate (11) with a control means enclosure (12) and an outer housing (13), wherein the actuating means (3) and the spring (5) are arranged within the control means enclosure (12).

2. Electrical position-detecting apparatus as claimed in Claim 1, **characterised in that** the spring (5) is constructed in the form of a helical spring and is so arranged in the housing (2) that a portion of the actuating means (3) is situated in the interior of the spring (5).

3. Electrical position-detecting apparatus as claimed in one of the preceding claims, **characterised in that** the position detection device (6) is arranged on the support plate (11) and between the control means enclosure (12) and outer housing (13).

4. Electrical position-detecting apparatus as claimed in one of the preceding claims, **characterised in that** the housing (2) is water-tight and/or dust-tight.

5. Electrical position-detecting apparatus as claimed in one of the preceding claims, **characterised in that** at least one magnet (14, 26, 30, 31) is arranged on the actuating means (3) and the position detection device (6) includes at least one Hall sensor (15, 16, 17, 18) for detecting the position of the magnet (14, 26, 30, 31).

6. Electrical position-detecting apparatus as claimed in one of the preceding claims, **characterised in that** the position detection device (6) includes two measuring points at each of which a pair of two Hall sensors (15, 16; 17, 18) is arranged.

7. Electrical position-detecting apparatus as claimed in one of the preceding claims, **characterised in that** the spacing of the two measuring points corresponds to twice the length of the magnet (14).

8. Electrical position-detecting apparatus as claimed in one of the preceding claims, **characterised in that** the lower measuring point is disposed one magnet length above the upper edge of the magnet (14) in its lowermost position and/or the upper measuring point is arranged one magnet length below the upper edge of the magnet (14) in its uppermost position.

9. Electrical position-detecting apparatus as claimed in one of the preceding claims, **characterised in that** the position detection device (6) includes a circuit board (19) extending parallel to the direction of movement of the control means (3), on which the Hall sensors (15, 16, 17, 18) are so arranged in pairs that in each case one Hall sensor (16, 18) is arranged horizontally and one (15, 17) vertically.

10. Electrical position-detecting apparatus as claimed in Claim 9, **characterised in that** the horizontal Hall sensors (16, 18) are aligned parallel to one another and the vertical Hall sensors (15, 17) are arranged above one another on a straight line, which extends parallel to the direction of movement of the actuating means (3).

11. Electrical position-detecting apparatus as claimed in one of the preceding claims, **characterised in that** the position detection device (6) is so constructed that it performs an end position determination of the actuating means (3) in order to initialise the electrical position-detecting apparatus (1).

12. Electrical position-detecting apparatus as claimed in Claim 5, **characterised in that** the position detection device (6) includes an optical sensor (23) in order to be able to start the initialisation.

13. Electrical position-detecting apparatus as claimed in one of the preceding claims, **characterised in that** it is designed for use on valves of the nominal sizes of DN4 to DN10, whereby an actuating means adapter (21) is attached to the actuating means (3) for the use on valves of the nominal sizes DN40 NC to DN100.

14. Electrical position-detecting apparatus as claimed in one of the preceding claims, **characterised in that** the actuating means adapter (21) is so constructed that it enables stepless adaptation to different valves.

15. Electrical position-detecting apparatus as claimed in one of the preceding claims, **characterised in that** the housing (2) consists at least partially of a plastic material.

16. Electrical position-detecting apparatus as claimed in one of the preceding claims, **characterised in that** the housing (2) is at least partially friction welded.

17. Electrical position-detecting apparatus as claimed in one of the preceding claims, **characterised in that** the housing (2) consists at least partially of a translucent material.

18. Electrical position-detecting apparatus as claimed in Claim 17, **characterised in that** at least one optical component (24, 25), which deflects light beams, is arranged in the translucent portion (11) of the housing (2).

19. Electrical position-detecting apparatus as claimed in one of the preceding claims, **characterised in that** for use on a valve with a rotary actuator, the position-detecting apparatus (1) includes an actuating means (3) on which at least one magnet (26, 30, 31) is so arranged that its poles (27, 28) extends transversely to a rotary axis of the actuating means (3) and the position-detecting device (1) determines the angular position of the actuating means (3) with the aid of the magnet (26, 30, 31).

20. Electrical position-detecting apparatus as claimed in Claim 19, **characterised in that** two magnets (30, 31) are so arranged on the actuating means (3) that their poles are offset with respect to one another.

21. A method of determining the position of actuating means (3) using electrical position-detecting apparatus (1) as claimed in one of the preceding claims, **characterised in that** the measured values of the Hall sensors (15 and 17, 16 and 18) extending in each case parallel to the same spatial axis are subtracted from one another and the difference value thus obtained is analysed by the position detection device (6) to determine the position of the actuating means (3).

22. A method of determining the position of an actuating means (3) as claimed in Claim 21, **characterised in that** the difference values of the measurement values from the Hall sensors (15 and 17, 16 and 18) are added and squared and the calculated values so obtained are compared with a reference curve stored in the position detection device (6), wherein at the position of the magnet (14) of the actuating means (3) the point is selected for which the smallest deviation of the calculated value from the reference curve is determined.

## Revendications

1. Dispositif de détermination de position électrique (1) pour le montage sur une vanne avec un boîtier (2) et un moyen de réglage (3) agencé de manière mobile dedans, qui est soumis, à l'aide d'un ressort (5) agencé sur le boîtier (2), à une force de ressort de sorte que, lorsqu'il est monté sur une vanne, il soit pressé contre un moyen d'entraînement de la vanne et puisse suivre ses mouvements dans la vanne, un dispositif de détection de position (6) étant prévu, lequel détecte la position du moyen de réglage (3), le dispositif de détection de position (6) étant réalisé de sorte qu'avec lui la position du moyen de réglage (3) soit détectée sans contact et le ressort (5) soit agencé dans le boîtier (2),
**caractérisé en ce**
**que** le boîtier (2) présente une partie inférieure de boîtier (7) qui peut être fixée sur une vanne et sur lequel une partie supérieure de boîtier (8) est agencée de préférence de manière rotative, le dispositif de détection de position (6) étant agencé dans la partie supérieure de boîtier (8) et la partie supérieure de boîtier (8) présentant une plaque porteuse (11) avec une enceinte de moyen de réglage (12) et un boîtier extérieur (13), le moyen de réglage (3) et le ressort (5) étant agencés dans l'enceinte de moyen de réglage (12).

2. Dispositif de détermination de position électrique selon la revendication 1,
**caractérisé en ce**
**que** le ressort (5) est réalisé comme un ressort hélicoïdal et est agencé dans le boîtier (2) de sorte qu'une partie du moyen de réglage (3) se trouve à l'intérieur du ressort (5).

3. Dispositif de détermination de position électrique selon l'une quelconque des revendications précédentes,
**caractérisé en ce**
**que** le dispositif de détection de position (6) est agencé sur la plaque porteuse (11) et entre l'enceinte de moyen de réglage (12) et le boîtier extérieur (13).

4. Dispositif de détermination de position électrique selon l'une quelconque des revendications précédentes,
**caractérisé en ce**
**que** le boîtier (2) est étanche à l'eau et/ou étanche à la poussière.

5. Dispositif de détermination de position électrique selon l'une quelconque des revendications précédentes,
**caractérisé en ce**
**qu'**au moins un aimant (14, 26, 30, 31) est agencé sur le moyen de réglage (3) et le dispositif de détection de position (6) présente au moins un capteur à effet Hall (15, 16, 17, 18) pour la détection de la position de l'aimant (14, 26, 30, 31).

6. Dispositif de détermination de position électrique selon l'une quelconque des revendications précédentes,
**caractérisé en ce**
**que** le dispositif de détection de position (6) présente deux points de mesure, sur lesquels respectivement une paire de deux capteurs à effet Hall (15, 16 ; 17, 18) est agencée.

7. Dispositif de détermination de position électrique selon l'une quelconque des revendications précédentes,
**caractérisé en ce**
**que** la distance entre les deux points de mesure correspond à deux fois la longueur de l'aimant (14).

8. Dispositif de détermination de position électrique selon l'une quelconque des revendications précédentes,
**caractérisé en ce**
**que** le point de mesure inférieur est agencé une longueur d'aimant au-dessus de l'arête supérieure de l'aimant (14) dans sa position la plus basse et/ou le point de mesure supérieur est agencé une longueur d'aimant au-dessous de l'arête supérieure de l'aimant (14) dans sa position la plus haute.

9. Dispositif de détermination de position électrique selon l'une quelconque des revendications précédentes,
**caractérisé en ce**
**que** le dispositif de détection de position (6) présente une platine (19) s'étendant parallèlement au sens de déplacement du moyen de réglage (3), sur laquelle les capteurs à effet Hall (15, 16, 17, 18) sont agencés par paires de sorte que respectivement un capteur à effet Hall (16, 18) soit agencé horizontalement et un capteur à effet Hall (15, 17) soit agencé verticalement.

10. Dispositif de détermination de position électrique selon la revendication 9,
**caractérisé en ce**
**que** les capteurs à effet Hall (16, 18) horizontaux sont orientés parallèlement l'un à l'autre et les capteurs à effet Hall verticaux (15, 17) sont agencés l'un au-dessus de l'autre sur une droite qui s'étend parallèlement au sens de déplacement du moyen de réglage (3).

11. Dispositif de détermination de position électrique selon l'une quelconque des revendications précédentes,
**caractérisé en ce**
**que** le dispositif de détection de position (6) est réalisé de sorte qu'il réalise pour l'initialisation du dispositif de détection de position électrique (1) une détermination de position finale du moyen de réglage (3).

12. Dispositif de détermination de position électrique selon la revendication 5,
**caractérisé en ce**
**que** le dispositif de détection de position (6) présente un capteur optique (23) afin de pouvoir lancer l'initialisation.

13. Dispositif de détermination de position électrique selon l'une quelconque des revendications précédentes,
**caractérisé en ce**
**qu'**il est conçu pour l'utilisation sur des vannes de diamètres nominaux de DN4 à DN100, un adaptateur de moyen de réglage (21) étant monté sur le moyen de réglage (3) pour l'utilisation sur des vannes de diamètres nominaux DN40 NC à DN100.

14. Dispositif de détermination de position électrique selon l'une quelconque des revendications précédentes,
**caractérisé en ce**
**que** l'adaptateur de moyen de réglage (21) est réalisé de sorte qu'il permette une adaptation continue aux différentes vannes.

15. Dispositif de détermination de position électrique selon l'une quelconque des revendications précédentes,
**caractérisé en ce**
**que** le boîtier (2) se compose au moins en partie d'une matière plastique.

16. Dispositif de détermination de position électrique selon l'une quelconque des revendications précédentes,
**caractérisé en ce**
**que** le boîtier (2) est soudé par friction au moins en partie.

17. Dispositif de détermination de position électrique selon l'une quelconque des revendications précédentes,
**caractérisé en ce**
**que** le boîtier (2) se compose au moins en partie d'un matériau perméable à la lumière.

18. Dispositif de détermination de position électrique selon la revendication 17,
**caractérisé en ce**
**qu'**au moins un composant optique (24, 25) déviant des rayons lumineux est agencé dans la partie perméable à la lumière (11) du boîtier (2).

19. Dispositif de détermination de position électrique selon l'une quelconque des revendications précédentes,
**caractérisé en ce**
**que** le dispositif de détection de position (1) présente pour l'utilisation sur une vanne avec un entraînement rotatif un moyen de réglage (3), sur lequel au moins un aimant (26, 30, 31) est agencé de sorte que ses pôles (27, 28) s'étendent transversalement à un axe de rotation du moyen de réglage (3) et le dispositif de détection de position (1) détermine à l'aide de l'aimant (26, 30, 31) la position angulaire du moyen de réglage (3).

20. Dispositif de détermination de position électrique selon la revendication 19,
**caractérisé en ce**
**que** deux aimants (30, 31) sont agencés sur le moyen de réglage (3) de sorte que leurs pôles soient décalés l'un par rapport à l'autre.

21. Procédé de détermination de la position d'un moyen de réglage (3) en utilisant un dispositif de détermination de position électrique (1) selon l'une quelconque des revendications précédentes,
**caractérisé en ce**
**que** les valeurs de mesure des capteurs à effet Hall (15 et 17, 16 et 18) s'étendant respectivement parallèlement à un même axe spatial sont soustraites les unes des autres et la valeur différentielle ainsi déterminée est évaluée par le dispositif de détermination de position (6) pour la détermination de la position du moyen de réglage (3).

22. Procédé de détermination de la position d'un moyen de réglage (3) selon la revendication 21,
**caractérisé en ce**
**que** les valeurs différentielles des valeurs de mesure des capteurs à effet Hall (15 et 17, 16 et 18) sont ajoutées et élevées au carré et les valeurs de calcul ainsi obtenues sont comparées avec une courbe de valeur de consigne enregistrée dans le dispositif de détection de position (6), le point pour lequel le plus faible écart entre la valeur de calcul et la courbe de valeur de consigne est déterminé étant choisi comme position de l'aimant (14) du moyen de réglage (3).
